Europäisches Patentamt

**European Patent Office** (11) Veröffentlichungsnummer: **0 033 935**

Office européen des brevets **B1**

(12) **EUROPÄISCHE PATENTSCHRIFT**

(45) Veröffentlichungstag der Patentschrift: 07.08.85 (51) Int. Cl.⁴: **H 01 M 4/00,** H 01 M 4/40,
H 01 M 4/58, G 02 F 1/23

(21) Anmeldenummer: **81100739.2**

(22) Anmeldetag: **02.02.81**

(54) Feste Elektrode in einer Brennstoffzelle, einer Hochleistungsbatterie, einer elektrochromen Zeichendarstellungseinheit oder einem elektrochemischen Speicherelement.

(30) Priorität: 07.02.80 DE 3004571

(43) Veröffentlichungstag der Anmeldung:
19.08.81 Patentblatt 81/33

(45) Bekanntmachung des Hinweises auf die
Patenterteilung:
07.08.85 Patentblatt 85/32

(84) Benannte Vertragsstaaten:
BE CH DE FR GB LI NL

(56) Entgegenhaltungen:
DE-A-2 433 044
DE-A-2 517 882
DE-A-2 655 918

J. Electrochem. Soc. 124 : 1569 bis 1765 (1979)
Ibid, April 1978, Seiten 511-513
J. Solid State Chem., 1977, Seiten 297-308
High Energy Batteries, 1967, Seite 84

**Die Akte enthält technische Angaben, die nach
dem Eingang der Anmeldung eingereicht
wurden und die nicht in dieser Patentschrift
enthalten sind.**

(73) Patentinhaber: **Max-Planck-Gesellschaft zur
Förderung der Wissenschaften e.V.
Bunsenstrasse 10
D-3400 Göttingen (DE)**

(72) Erfinder: **Weppner, Werner, Dr.
Im Lauchhau 11
D-7000 Stuttgart 80 (DE)**

(74) Vertreter: **Weickmann, Heinrich, Dipl.-Ing. et al
Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

# 0 033 935

**Beschreibung**

Die Erfindung betrifft eine feste Elektrode in einer Brennstoffzelle, einer Hochleistungsbatterie, einer elektrochromen Zeichendarstellungseinheit oder einem elektrochemischen Speicherelement.

Es ist bekannt, feste Elektroden mit möglichst hoher elektronischer (i.a. metallischer) Leitfähigkeit zu verwenden. Diese Elektroden gestatten jedoch nur eine geringe Stromdichte bei der Be- und Entladung. Es zeigen sich Spannungseinbußen (Polarisation) beim Entladen und überhöhte Spannungen beim Laden; hierdurch wird die nutzbare Energie gemindert. Um hohe Ströme zu erzielen, mußten (wenn flüssige Elektrolyte verwendet werden konnten) die Elektrodenmaterialien porös gemacht werden, um eine große Oberfläche (Grenzfläche zwischen Elektrode und Elektrolyt) zu erzeugen.

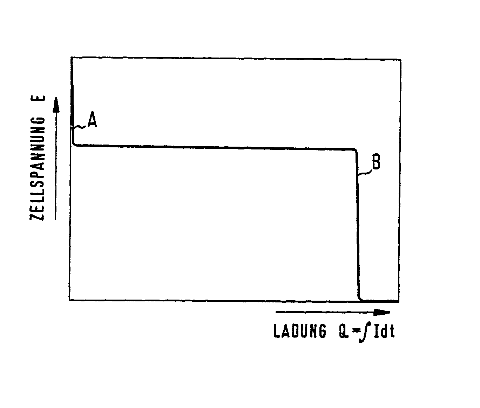

Aus der Zeitschrift J. Electrochem. Soc. *124*, 1569 (1977) ist eine elektrochemische Technik zur Bestimmung kinetischer Kenngrößen von gemischt ionisch und elektronisch leitenden Festkörpern bekannt. Diese Bestimmungstechnik wird am Beispiel der Verbindung (Modellsubstanz) $Li_3Sb$ erläutert. Es werden die chemischen-, Tracer- und Komponentendiffusionskoeffizienten als Funktion der Stöchiometrie im Gebiet zwischen $Li_{2.999}Sb$ und $Li_{3.001}Sb$ gemessen und angegeben. Von der Anwendung der Verbindung in Hochleistungsbatterien ist nicht die Rede. Es ist auch keine Entladekurve gezeigt. Die in Abb. 6 angegebene Kurve (Spannung gegen Stöchiometrie) wurde für den Grenzfall unendlich kleiner Ströme erhalten und hat daher keinen Bezug zur Realität bei einer Batterie mit einem endlichen Entladestrom. Über die Verhältnisse der Leitfähigkeiten und Konzentrationen der Elektronen zu denen der Ionen ist in dieser Arbeit nichts ausgesagt.

Aufgabe der Erfindung ist es demgegenüber, die Stromdichte (Strom/Elektrodenoberfläche) bei der Be- und Entladung erhöhen zu können und Spannungseinbußen bei der Entladung und Spannungsüberhöhungen bei der Ladung zu mindern.

Zur Lösung dieser Aufgabe ist die Elektrode dadurch gekennzeichnet, daß sie eine höhere elektrische Leitfähigkeit für Elektronen oder Löcher als für die Ionen aufweist, und daß die Konzentration der in ihr beweglichen Elektronen oder Löcher geringer ist als die der in ihr enthaltenen beweglichen Ionen.

Vorzugsweise handelt es sich hierbei um ein halbleitendes Material. Überraschenderweise ergibt sich mit einer erfindungegemäßen Elektrode eine bessere Lösung der Aufgabe als mit einer Elektrode, die eine hohe (metallische) Elektronen- oder Löcherleitfähigkeit hat. In einer erfindungsgemäßen Elektrode stellt sich das chemische Gleichgewicht mit den Ionen bei der Be- und Entladung sehr rasch ein, so daß sich auch eine geringe Polarisation und damit geringe Verluste (z.B. durch Wärme) ergeben.

Um die Ionenbeweglichkeit besonders groß zu machen, ist die Elektrode bevorzugt dadurch gekennzeichnet, daß ihre coulometrische Titrationskurve (stationäre Entladekurve:Gleichgewichts-Zellspannung E in Abhängigkeit von der Menge der geflossenen Ladung Q) im entladenen Zustand (B) und vorzugsweise auch im vollständig geladenen Zustand (A) steil abfällt. Die coulometrische Titrationskurve braucht die Steilheit im nahezu vollständig geladenen Zustand (A) nur bei einer Sekundärzelle (einer wiederaufladbaren galvanischen Zelle) zu haben. Bei einem Primärelement (das nur für eine einmalige Entladung vorgesehen ist), ist nur die Steilheit im Zustand (B) erforderlich. Die Forderung der Steilheit sowohl im Zustand (A) als auch im Zustand (B) ist nicht nur bei wiederaufladbaren Batterien, sondern auch bei elektrochromen Zeichendarstellungseinheiten und elektrochemischen Speicherelementen vorteilhaft, da in diesen Fällen die Ionen in beiden Stromrichtungen schnell hin und her transportiert werden sollen. Aus dem gleichen Grund ist in ihr bevorzugt die Konzentration von die beweglichen Ionen aufnehmenden Defektstellen mehr als 1%, besser mehr als 10% der maximalen Konzentration der in ihr enthaltenen beweglichen Ionen.

Es ist schwierig, die Bedingungen für die Forderung nach ausreichender Fehlordnung für einen schnellen Ionentransport allgemein anzugeben. Es genügt jedoch, daß vorzugsweise 1 bis 10% der regulären Gitterpositionen "falsch" besetzt sind.

Eine bevorzugte Ausbildung ist dadurch gekennzeichnet, daß die Mindeststeilheit

$$\frac{dE}{dQ}$$

im entladenen Zustand (B) und bevorzugt auch im geladenen Zustand (A) gegeben ist durch

$$\frac{dE}{dQ} \geq 10^2 \frac{MkT}{mz^2q^2cV_M} \quad \text{vorzugsweise}$$

$$\frac{dE}{dQ} \geq 10^3 \frac{MkT}{mz^2q^2cV_M}$$

2

wobei M=Molekulargewicht ⎱ der bei B bzw. A stöchio-
m=Masse ⎬ metrisch variierten Phase
$V_M$=Molvolumen ⎰ in der Elektrode
c=Konzentration der beweglichen Ionen
z=Ladungszahl der beweglichen Ionen
q=Elementarladung
k=Boltzmann's Konstante
T=absolute Temperatur

Der in der angegebenen Formel enthaltene Faktor $10^2$ bzw. $10^3$ ist im wesentlichen der thermodynamische Verstärkungsfaktor W.

In einer bevorzugten Ausbildung ist die Elektrode dadurch gekennzeichnet, daß ihr thermodynamischer Verstärkungsfaktor W, ermittelt durch

$$W = - \frac{t_e z q}{kT} \frac{dE}{d\delta}$$

wobei

$$t_e = \frac{\sigma e}{\sigma e + \sigma_2}$$

und

$\sigma e$=Leitfähigkeit der Elektronen oder Löcher
$\sigma_2$=Leitfähigkeit der beweglichen Ionen
$\delta$=stöchiometrische Zahl der beweglichen Ionen, größer als $10^2$, vorzugsweise größer als $10^3$ ist.

Als besonders geeignet hat sich für die Elektrode ein Material erwiesen, das zwischen dem entladenen Zustand (B) und dem vollständig geladenen Zustand (A) eine Phasenumwandlung erfährt.

In einem erfolgreich erprobten Fall hatte das Material im geladenen Zustand (A) die Zusammensetzung Li in Sb oder Bi und im entladenen Zustand (B) die Zusammensetzung $Li_3Sb$ oder $Li_3Bi$. Die Verstärkungsfaktoren von $Li_3Sb$ und $Li_3Bi$ betragen 70000 bzw. 370. Derartige Verstärkungsfaktoren sind mit bekannten Elektrodenmaterialien nicht zu erzielen, insbesondere nicht mit Intercalationsverbindungen, wie z.B. $Li_xTiS_2$.

Als ein anderes geeignetes Material hat sich ausgezeichnet ein Material der Zusammensetzung $\alpha$-$Ag_2S$ bewährt. Der Verstärkungsfaktor dieses Materials liegt um etwa 10000, was einem Diffusionskoeffizienten von 0,47 $cm^2$ $sec^{-1}$ bei 200°C entspricht, also einem Diffusionskoeffizienten, der viel höher ist als in den meisten Flüsigkeiten.

In der beigefügten Zeichnung ist ein Beispiel einer stationären Entladekurve dargestellt. Es ist die Gleichgewichts-Zellspannung E in Abhängigkeit von der Menge der geflossenen Ladung $Q = \int Idt$ (Zeitintegral über den geflossenen Strom) dargestellt.

Die Kurve nennt man auch CT-Kurve (coulometrische Titrationskurve). Bei der Entladung steigt die Kurve unterhalb des Punkts A, der der Ladungsmenge $Q_A$ entspricht, steil an, oberhalb des Punkts B, der der Ladung $Q_B$ entspricht, fällt die Kurve steil ab.

**Patentansprüche**

1. Feste Elektrode in einer Brennstoffzelle, einer Hochleistungsbatterie, einer elektrochromen Zeichendarstellungseinheit oder einem elektrochemischen Speicherelement, dadurch gekennzeichnet, daß sie eine höhere elektrische Leitfähigkeit für Elektronen oder Löcher als für die Ionen aufweist und daß die Konzentration der in ihr beweglichen Elektronen oder Löcher geringer ist als die der in ihr enthaltenen beweglichen Ionen.

2. Elektrode nach Anspruch 1, dadurch gekennzeichnet, daß ihre coulometrische Titrationskurve (stationäre Entladungskurve: Gleichgewichts-Zellspannung E in Abhängigkeit von der Menge der geflossenen Ladung Q) im entladenen Zustand (B) steil abfällt.

3. Elektrode nach Anspruch 2, dadurch gekennzeichnet, daß ihre coulometrische Titrationskurve auch im vollständig geladenen Zustand (A) steil abfällt.

4. Elektrode nach einem der vorstehenden Ansprüche, dadurch gekennzeichnet, daß in ihr die Konzentration von die beweglichen Ionen aufnehmenden Defektstellen mehr als 1% der maximalen Konzentration der in ihr enthaltenen beweglichen Ionen ausmacht.

5. Elektrode nach Anspruch 4, dadurch gekennzeichnet, daß die Konzentration mehr als 10% ausmacht.

6. Elektrode nach einem der Ansprüche 2 bis 5, dadurch gekennzeichnet, daß die Mindeststeilheit

3

**0 033 935**

$$\frac{dE}{dQ}$$

im entladenen Zustand (B) gegeben ist durch

$$\frac{dE}{dQ} \geq 10^2 \frac{MkT}{mz^2q^2cV_M}$$

wobei

$M$=Molekulargewicht $\Big\rangle$ der bei B bzw A stöchio-
$m$=Masse $\Big\rangle$ metrisch variierten Phase
$V_M$=Molvolumen $\Big\rfloor$ in der Elektrode
$c$=Konzentration der beweglichen Ionen
$z$=Ladungszahl der beweglichen Ionen
$q$=Elementarladung
$k$=Boltzmann's Konstante
$T$=absolute Temperatur.

7. Elektrode nach Anspruch 6, dadurch gekennzeichnet, daß die Mindeststeilheit

$$\frac{dE}{dQ}$$

auch im geladenen Zustand vorliegt.

8. Elektrode nach Anspruch 6 oder 7, dadurch gekennzeichnet, daß die Mindeststeilheit

$$\frac{dE}{dQ} \geq 10^3 \frac{MkT}{mz^2q^2cV_M} \text{ beträgt.}$$

9. Elektrode nach einem der vorstehenden Ansprüche, dadurch gekennzeichnet, daß ihr thermodynamischer Verstärkungsfaktor W, ermittelt durch

$$W = - \frac{t_ezq}{kT} \frac{dE}{d\delta}$$

wobei

$$t_e = \frac{\sigma e}{\sigma e + \sigma_2}$$

und
$\sigma e$=Leitfähigkeit der Elektronen oder Löcher
$\sigma_2$=Leitfähigkeit der beweglichen Ionen
$\delta$=stöchiometrische Zahl der beweglichen Ionen größer als $10^2$ ist.

10. Elektrode nach Anspruch 9, dadurch gekennzeichnet, daß der thermodynamische Verstärkungsfaktor W größer als $10^3$ ist.

11. Elektrode nach einem der vorstehenden Ansprüche, dadurch gekennzeichnet, daß sie aus einem Material besteht, das zwischen dem entladenen Zustand (B) und dem vollständig geladenen Zustand (A) eine Phasenumwandlung erfährt.

12. Elektrode nach einem der vorstehenden Ansprüche, dadurch gekennzeichnet, daß sie im geladenen Zustand (A) die Zusammensetzung Li in Sb oder Bi und im entladenen Zustand (B) die Zusammensetzung $Li_3Sb$ oder $Li_3Bi$ aufweist.

13. Elektrode nach einem der Ansprüche 1 bis 9, dadurch gekennzeichnet, daß sie die Zusammensetzung $\alpha$-$Ag_2S$ aufweist.

**Revendications**

1. Electrode solide dans une pile à combustible, une batterie à haute puissance, un dispositif d'affichage électrochrome ou un élément d'accumulateur électrochimique, caractérisée en ce qu'elle

4

présente une conductivité électrique plus élevée pour des électrons ou trous que pour les ions et en ce que la concentration des électrons ou trous mobiles dans l'électrode est inférieure à celle des ions mobiles qui y sont contenus.

2. Electrode selon la revendication 1, caractérisée en ce que sa courbe de titration coulométrique (courbe de décharge stationnaire:tension d'équilibre E de la pile en fonction de la quantité de la charge écoulée Q) présente, à l'état déchargé (B), une chute à pente raide.

3. Electrode selon la revendication 2, caractérisée en ce que sa courbe de titration coulométrique présente à l'état complètement chargé (A) également une chute à pente raide.

4. Electrode selon l'une des revendications précédentes, caractérisée en ce que dans celle-ci la concentration de trous recevant les ions mobiles est supérieure à 1% de la concentration maximale des ions mobiles qui y sont contenus.

5. Electrode selon la revendication 4, caractérisée en ce que la concentration représente plus de 10%.

6. Electrode selon l'une des revendications 2 à 5, caractérisée en ce que la raideur de pente minimale

$$\frac{dE}{dQ}$$

à l'état déchargé (B) est déterminée par

$$\frac{dE}{dQ} \geq 10^2 \; \frac{MkT}{mz^2q^2cV_M}$$

$M$=poids moléculaire ⎫ de la phase, dans l'élec-
$m$=masse ⎬ trode, variant stoechiomé-
$V_M$=volume molaire ⎭ triquement en B ou en A
$c$=concentration des ions mobiles
$z$=nombre de charges des ions mobiles
$q$=charge élémentaire
$k$=constante de Boltzmann
$T$=température absolue.

7. Electrode selon la revendication 6, caractérisée en ce que la raideur de pente minimale

$$\frac{dE}{dQ}$$

se présente également à l'état chargé.

8. Electrode selon la revendication 6 ou 7, caractérisée en ce que la raideur de pente minimale est égale à

$$\frac{dE}{dQ} \geq 10^3 \; \frac{MkT}{mz^2q^2cV_M}$$

9. Electrode selon l'une des revendications précédentes, caractérisée en ce que son facteur d'amplification thermodynamique W, déterminé par

$$W = - \frac{t_e zq}{kT} \; \frac{dE}{d\delta}$$

où

$$t_e = \frac{\sigma e}{\sigma e + \sigma_2}$$

et

$\sigma e$=conductivité des électrons ou trous
$\sigma_2$=conductivité des ions mobiles et
$\delta$=nombre stoechiométrique des ions mobiles, est supérieur à $10^2$.

10. Electrode selon la revendication 9, caractérisée en ce que le facteur d'amplification thermodynamique W est supérieur à $10^3$.

11. Electrode selon l'une des revendications précédentes, caractérisée en ce qu'elle est constituée par une matière qui subit une transformation de phase entre l'état déchargé (B) et l'état complètement chargé (A).

12. Electrode selon l'une des revendications précédentes, caractérisée en ce qu'elle présente à l'état chargé (A) la composition Li dans Sb ou Bi et à l'état déchargé (B) la composition $Li_3Sb$ ou $Li_3Bi$.

13. Electrode selon l'une des revendications 1 à 9, caractérisée en ce qu'elle présente la composition $\alpha-Ag_2S$.

**Claims**

1. Solid electrode in a fuel cell, a heavy-duty battery, an electrochromic signal display unit or an electrochemical storage element, characterised in that it has a higher electrical conductivity for electrons or holes than for the ions and that the concentration of the electrons or holes movable in it is smaller than that of the movable ions contained in it.

2. Electrode according to claim 1, characterised in that its coulometric titration curve (stationary discharge curve:equilibrium cell voltage E in dependence upon the amount of flowed charge Q) decreases steeply in the discharge state (B).

3. Electrode according to claim 2, characterised in that its coulometric titration curve also decreases steeply in the completed charged state (A).

4. Electrode according to one of the preceding claims, characterised in that in it the concentration of defect places taking up the movable ions accounts for more than 1% of the maximum concentration of the movable ions contained in it.

5. Electrode according to claim 4, characterised in that the concentration accounts for more than 4%.

6. Electrode according to one of claims 2 to 5, characterised in that the minimum steepness

$$\frac{dE}{dQ}$$

in the discharged state (B) is given by

$$\frac{dE}{dQ} \geq 10^2 \frac{MKT}{mz^2q^2cV_M}$$

whereby

M = molecular weight ⎫ of the phase in the electrode
m = mass ⎬ stoichiometrically varied in
$V_M$ = mole volume ⎭ the case of B or A
c = concentration of the movable ions
z = charge number of the movable ions
q = elemental charge
K = Boltzmann's constant
T = absolute temperature.

7. Electrode according to claim 6, characterised in that the minimum steepness

$$\frac{dE}{dQ}$$

is also present in the charged state.

8. Electrode according to claim 6 or 7, characterised in that the minimum steepness amounts to

$$\frac{dE}{dQ} \geq 10^3 \frac{MKT}{mz^2q^2cV_M}$$

9. Electrode according to one of the preceding claims, characterised in that its thermodynamic amplification factor W is determined by

$$W = -\frac{t_e zq}{kT} \frac{dE}{d\delta},$$

whereby

0 033 935

$$t_e = \frac{\sigma e}{\sigma e + \sigma_z}$$

and

$\sigma e$=conductivity of the electrons or holes, $\sigma_z$=conductivity of the movable ions, $\delta$=stoichiometric number of the movable ions is greater than $10^2$.

10. Electrode according to claim 9, characterised in that the thermodynamic amplification factor W is greater than $10^3$.

11. Electrode according to one of the preceding claims, characterised in that it consists of a material which undergoes a phase change between the discharged state (B) and the completely charged state (A).

12. Electrode according to one of the preceding claims, characterised in that in the charged state (A) it has the composition Li in Sb or Bi and in the discharged state (B) the composition $Li_3Sb$ or $Li_3Bi$.

13. Electrode according to one of claims 1 to 9, characterised in that it has the composition $\alpha$-$Ag_2S$.

7